# EUROPEAN PATENT SPECIFICATION

(11) **EP 3 763 189 B1**
(45) Date of publication and mention of the grant of the patent: **03.08.2022**
(21) Application number: 20181988.5
(22) Date of filing: 24.06.2020
(51) Int. Cl.: A01D 34/00

(54) **WASHING SYSTEM, AND METHOD OF CONTROLLING WASHING SYSTEM**
WASCHANLAGE UND VERFAHREN ZUR STEUERUNG DER WASCHANLAGE
SYSTÈME DE LAVAGE ET PROCÉDÉ DE COMMANDE DU SYSTÈME DE LAVAGE

(30) Priority: 12.07.2019 JP 2019130525
(43) Date of publication of application: 13.01.2021
(73) Proprietor: HONDA MOTOR CO., LTD., Minato-ku Tokyo 107-8556 (JP)
(72) Inventor: TAKAHASHI, Hiroya, Saitama, 351-0193 (JP); KOTANI, Yoshiaki, Saitama, 351-0193 (JP); TAKAHASHI, Hiroto, Saitama, 351-0193 (JP); KAMEYAMA, Naoki, Saitama, 351-0193 (JP)
(74) Representative: Feller, Frank

(56) References cited:
- EP-A1- 3 225 094
- EP-A2- 2 158 802
- FR-A1- 2 677 903
- US-A1- 2003 159 722
- US-A1- 2016 339 879

## Description

### BACKGROUND OF THE INVENTION

### Field of the Invention

The present invention relates to a washing system comprising an autonomous traveling work machine and a washing station, anda method of controlling a washing system.

### Description of the Related Art

An autonomous traveling work machine has been known which works while autonomously traveling (see, for example, Japanese Patent Laid-Open No. 2016-218733).

The autonomous traveling work machine disclosed in Japanese Patent Laid-Open No. 2016-218733 includes wheels and is capable of traveling autonomously based on peripheral information. Furthermore, a cleaning area where the wheels are cleaned is equipped with a cleaning mat that cleans the wheels as the wheels turn to rub against the cleaning mat. Furthermore, the autonomous traveling work machine includes a controller that controls an operation of the autonomous traveling work machine so as to execute the cleaning process of the wheels in the cleaning area.

The autonomous traveling work machine disclosed in Japanese Patent Laid-Open No. 2016-218733 can execute the cleaning process of the wheels; however, Japanese Patent Laid-Open No. 2016-218733 does not disclose a cleaning process in a case where dirt adheres to a position other than the wheels of the autonomous traveling work machine. Furthermore, Japanese Patent Laid-Open No. 2016-218733 does not disclose that dirt that adheres to the autonomous traveling work machine is washed off with a liquid such as water.

EP 2 158 802 A2 discloses a washing system according to the preamble of claim 1.

EP 3 225 094 A1 discloses: an autonomous traveling work machine executing a predetermined work while traveling autonomously, comprising: a work machine main body; a controller controlling an operation of the work machine main body; and a work unit executing the predetermined work, wherein the work unit comprises: a work member executing the predetermined work; a first drive rotationally driving the work member, and a lifting and lowering unit lifting and lowering the work member, wherein the controller is configured to cause the first drive to rotationally drive the work member, wherein the controller is configured to control the operation of the work machine main body and the work unit when the autonomous traveling work machine moves.

On the other hand, as an autonomous traveling work machine, a mower has been known which executes a mowing work while traveling autonomously. In the mower, pieces of mowed grass may adhere to the periphery of a cutting blade disc that is disposed on a lower portion of the mower main body. In such a case where dirt adheres to the lower portion of the mower main body, a user has used a hose or the like to apply water to the lower portion of the mower main body, washing off the dirt.

The present invention has an object to provide: a washing system that is capable of washing off dirt that adheres to the work machine main body, and a method of controlling the washing system.

### SUMMARY OF THE INVENTION

The present invention provides a washing system comprising an autonomous traveling work machine executing a predetermined work while traveling autonomously and a washing station according to claim 1.

The autonomous traveling work machine includes: a work machine main body; and a controller controlling an operation of the work machine main body so that the work machine main body is washed with a washing liquid being supplied from a washing station.

The above autonomous traveling work machine includes a work unit executing the predetermined work, wherein the controller operates the work unit so that the work machine main body is washed.

The work unit includes: a work member executing the predetermined work; and a first drive rotationally driving the work member, and the controller causes the first drive to rotationally drive the work member.

The autonomous traveling work machine includes a spreading member spreading the washing liquid on the work member.

The spreading member has an opening causing the washing liquid to flow out, and the controller causes the first drive to rotationally drive the spreading member.

Preferably, the autonomous traveling work machine includes a lifting and lowering unit lifting and lowering the work member, wherein the controller operates the lifting and lowering unit so that the work machine main body is washed.

Preferably, when the work machine main body is washed, the controller causes the lifting and lowering unit to lower the work member.

Preferably, when the autonomous traveling work machine moves to the washing station, the controller causes the lifting and lowering unit to lift the work member.

Preferably, the above autonomous traveling work machine includes a second drive driving the work machine main body to travel, wherein the controller causes the second drive to drive the work machine main body to travel so that the work machine main body is washed.

Preferably, the controller causes the second drive to drive the work machine main body to travel so that a washing target portion of the work machine main body slides on a sliding member being disposed on the washing station.

The washing station is equipped with a water supplier supplying the autonomous traveling work machine with the washing liquid, the autonomous traveling work machine including a water receiver receiving the washing liquid from the water supplier when the autonomous traveling work machine is disposed on the washing station.

Preferably the washing station is equipped with a power supplier supplying the autonomous traveling work machine with power, the autonomous traveling work machine including: a storage battery; and a charger, when the autonomous traveling work machine is disposed on the washing station, charging the storage battery with the power being supplied from the power supplier.

Preferably, the washing station includes a sliding member sliding on a washing target portion of the work machine main body, the autonomous traveling work machine includes a second drive driving the work machine main body to travel, and the controller causes the second drive to drive the work machine main body to travel so that the washing target portion slides on the sliding member.

The present invention also provides a method of controlling a washing system according to claim 8.

The washing system can wash off dirt that adheres to the work machine main body.

### BRIEF DESCRIPTION OF THE DRAWINGS

FIG. 1 is a view showing one example of a configuration of a mowing system according to an embodiment of the present invention;
FIG. 2 is a side view showing one example of a configuration of a robotic mower;
FIG. 3 is a side view showing one example of a configuration of a washing system;
FIG. 4 is a side cross-sectional view showing one example of a configuration of a spreading member;
FIG. 5 is a flowchart showing one example of processing of a first controller;
FIG. 6 is a view showing another embodiment of a cutting blade disc; and
FIG. 7 is a view showing another embodiment of a placement base.

### DETAILED DESCRIPTION OF THE PREFERRED EMBODIMENTS

Hereinafter, embodiments will be explained with reference to the drawings.

### [1. Configuration of unmanned mowing system]

### [1-1. Overall configuration of unmanned mowing system]

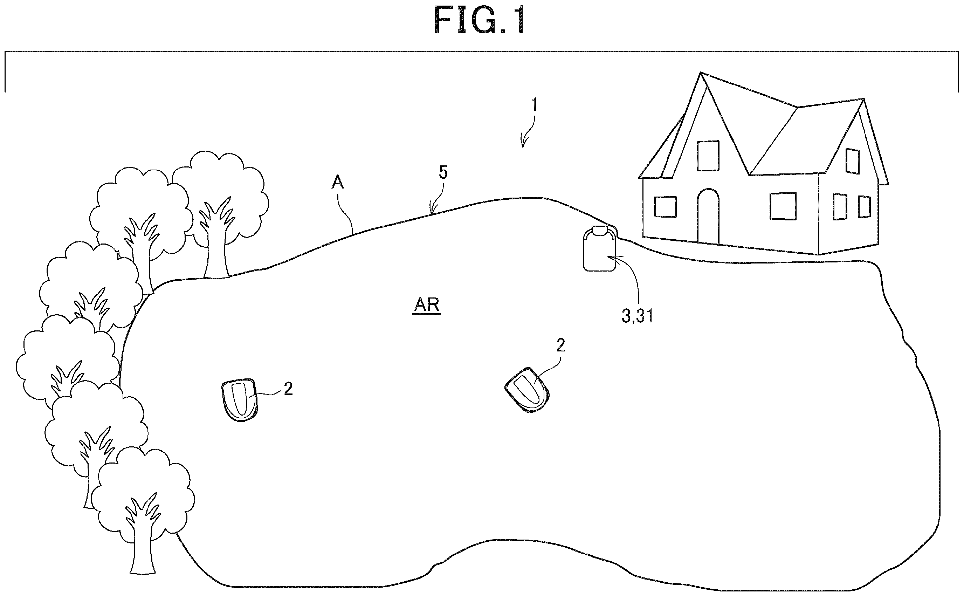

FIG. 1 is a view showing a configuration of a mowing system 1 according to the present embodiment.

The mowing system 1 includes a robotic mower 2, an area wire 5 that defines a mowing area AR where a mowing work is to be executed, and a washing station 3.

The robotic mower 2 is an autonomous traveling work machine that cuts grass while traveling autonomously in the mowing area AR in an unmanned manner. The area wire 5 is a member that is laid along a boundary A by a contractor or the like to allow the robotic mower 2 to detect the boundary A of the mowing area AR. In the present embodiment, the laid area wire 5 is magnetic, and the robotic mower 2 detects magnetism of the area wire 5, detecting the boundary A of the mowing area AR. The robotic mower 2 corresponds to one example of an "autonomous traveling work machine."

Furthermore, the mowing system 1 may include a plurality of (for example, two) robotic mowers 2.

The washing station 3 is installed in the mowing area AR and supplies the robotic mower 2 with tap water. The tap water corresponds to one example of a "washing liquid."

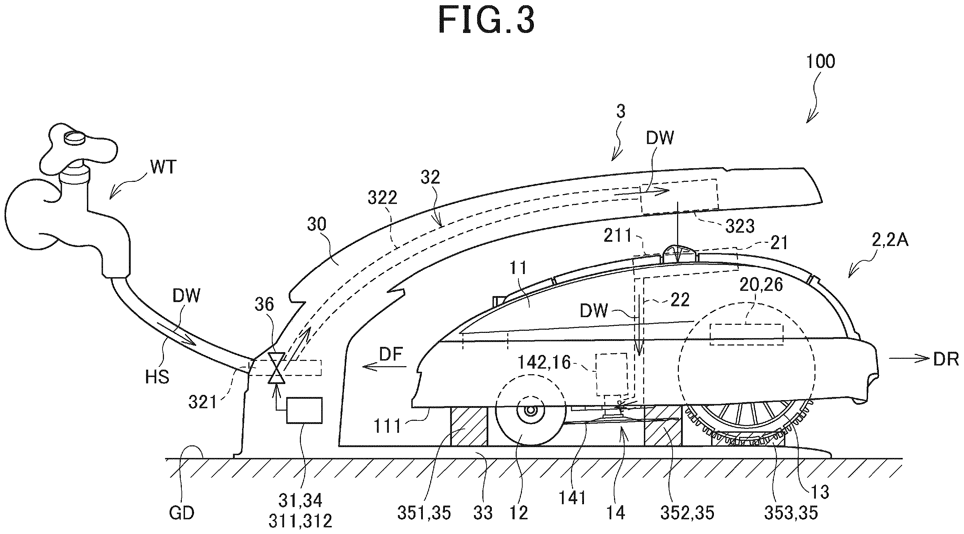

The washing station 3 includes a control board 31. The control board 31 will be explained later with reference to FIG. 3. The washing station 3 is also a standby location of the robotic mower 2 at the time of non-working. At the end of the mowing work, the robotic mower 2 autonomously travels to return to the washing station 3 and is washed as necessary at the washing station 3.

### [1-2. Configuration of robotic mower]

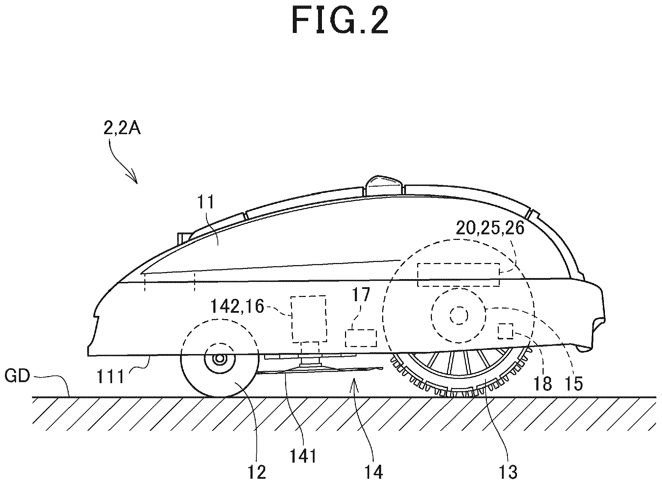

FIG. 2 is a side view showing one example of a configuration of the robotic mower 2 according to the present embodiment.

The robotic mower 2 may be referred to as a mower 2 in the following explanation. The mower 2 includes a mower main body 2A and a first controller 20. The first controller 20 controls an operation of the mower main body 2A.

The mower main body 2A includes a housing 11, right and left front wheels 12 that are provided at a front portion of the housing 11, right and left rear wheels 13 that are provided at a rear portion of the housing 11, and a work unit 14 that is provided at a lower center portion of the housing 11.

The work unit 14 includes a work unit driving motor 142 and a cutting blade disc 141 with a cutting blade being provided on a circular plate-shaped disc, and the work unit driving motor 142 rotationally drives the cutting blade disc 141, cutting grass. The mower main body 2A corresponds to one example of a "work machine main body." The cutting blade disc 141 corresponds to one example of a "work member."

The mower main body 2A includes right and left traveling motors 15, a lifting and lowering mechanism 16, a battery 17, a wheel speed sensor 18, a first communicator 25, and a charger 26. The housing 11 stores the right and left traveling motors 15, the work unit driving motor 142, the lifting and lowering mechanism 16, the battery 17, the wheel speed sensor 18, the first controller 20, the first communicator 25, and the charger 26. The housing 11 has a bottom surface 111.

Each of the right and left traveling motors 15 drives the mower main body 2A to travel. Specifically, the right and left traveling motors 15 individually drive the respective right and left rear wheels 13. The traveling motor 15 drives the rear wheel 13 according to an instruction that is issued by the first controller 20, causing the mower main body 2A to travel. The traveling motor 15 corresponds to one example of a "second drive."

The work unit driving motor 142 drives the cutting blade disc 141 and the lifting and lowering mechanism 16. According to an instruction that is issued by the first controller 20, the work unit driving motor 142 rotationally drives the cutting blade disc 141, executing the mowing work. The mowing work corresponds to one example of a "predetermined work." The work unit driving motor 142 corresponds to one example of a "first drive." According to an instruction that is issued by the first controller 20, the work unit driving motor 142 drives the lifting and lowering mechanism 16, lifting and lowering the cutting blade disc 141.

The battery 17 supplies each unit of the mower 2 with operation power. The wheel speed sensor 18 detects a rotational speed of the right and left rear wheels 13 that are driving wheels. A detection signal of the wheel speed sensor 18 is transmitted to the first controller 20. The lifting and lowering mechanism 16 lifts and lowers the cutting blade disc 141. The lifting and lowering mechanism 16 corresponds to one example of a "lifting and lowering unit." The battery 17 corresponds to one example of a "storage battery."

The first controller 20 controls an operation of each unit of the mower 2. The first controller 20 has, for example, a processor such as a central processing unit (CPU) and a memory such as a random access memory (RAM) or a read only memory (ROM). The memory stores work target area related map data, mowing work schedule data, and data of, for example, a control program. Specifically, the processor of the first controller 20 executes the control program, controlling the operation of each unit of the mower 2. The first controller 20 corresponds to one example of a "controller."

The first controller 20 controls the operation of the mower main body 2A so that the mower main body 2A is washed with the tap water that is supplied from the washing station 3. A function of the first controller 20 will be explained later with reference to FIG. 3.

The first communicator 25 communicates with a second communicator 312 of the washing station 3. Specifically, the first communicator 25 communicates with the second communicator 312 by, for example, wireless communication such as Bluetooth (registered trademark). The second communicator 312 will be explained later with reference to FIG. 3.

The charger 26 charges the battery 17. Specifically, the charger 26 is supplied with AC power from a power supplier 34 and converts the AC power into DC power, charging the battery 17. It should be noted that although in the present embodiment, a case is explained in which the charger 26 converts AC power into DC power, the power supplier 34 may convert AC power into DC power.

### [1-3. Configuration of washing system]

FIG. 3 is a side view showing one example of a configuration of a washing system 100.

The washing system 100 includes the washing station 3 and the mower 2. The washing system 100 washes the mower 2.

The washing station 3 includes an arch member 30, the control board 31, a water supplier 32, a placement base 33, the power supplier 34, a sliding member 35, and an electric valve 36.

The arch member 30 forms an arch shape so as to cover the mower 2 when the mower 2 is placed on the placement base 33. The arch member 30 is equipped with the control board 31, the water supplier 32, the power supplier 34, and the electric valve 36.

The control board 31 controls an operation of the washing station 3. The control board 31 is equipped with a second controller 311 and the second communicator 312.

The second controller 311 has, for example, a processor such as a CPU and a memory such as RAM or ROM. The memory stores data of, for example, a control program. The processor executes the control program, controlling the operation of the washing station 3.

The second communicator 312 communicates with the first communicator 25 of the mower 2. Specifically, the second communicator 312 communicates with the first communicator 25 by, for example, wireless communication such as Bluetooth (registered trademark).

The water supplier 32 supplies the mower 2 with the tap water. The water supplier 32 includes an inflow opening 321, a second flow path 322, and an outflow opening 323.

The inflow opening 321 is supplied with the tap water from a faucet WT via a hose HS. The second flow path 322 causes the tap water that is supplied to the inflow opening 321 to flow to the outflow opening 323. The outflow opening 323 supplies a water receiver 21 that is disposed on an upper portion of the mower 2 with the tap water that is supplied from the second flow path 322.

The electric valve 36 is disposed on the second flow path 322 and, according to an instruction that is issued by the second controller 311, blocks or releases the flow of the tap water that is supplied from the faucet WT via the hose HS. Specifically, when washing processing of the mower main body 2A is executed, the flow of the tap water is released, and when the washing processing of the mower main body 2A is not executed, the flow of the tap water is blocked.

On the placement base 33, the mower 2 is placed. The outflow opening 323 and the water receiver 21 are disposed so that when the mower 2 is placed on the placement base 33, the water supplier 32 supplies the water receiver 21 with the tap water. One end of the placement base 33 is fixed to a base end of the arch member 30. The one end of the placement base 33 is a left end of the placement base 33 in FIG. 3. An upper surface of the other end of the placement base 33 has irregularities so as to allow the mower 2 to easily move onto the placement base 33. The other end of the placement base 33 is a right end of the placement base 33 in FIG. 3. Furthermore, on an upper surface of the placement base 33, the sliding member 35 is fixed.

The sliding member 35 which is fixed on the upper surface of the placement base 33, when the mower 2 travels on the placement base 33, slides on a washing target portion of the mower main body 2A. Examples of the washing target portion of the mower main body 2A include the bottom surface 111 of the housing 11, a peripheral surface of the front wheel 12, and a peripheral surface of the rear wheel 13. The washing target portion is, in other words, a portion to which dirt is likely to adhere. The dirt includes pieces of mowed grass, and dust.

The sliding member 35 includes, for example, a brush. Furthermore, the sliding member 35 may be a columnar-shaped brush that is configured to be rotatable.

The sliding member 35 includes a first sliding member 351, a second sliding member 352, and a third sliding member 353.

The first sliding member 351 slides on a front portion of the bottom surface 111 of the housing 11 and the peripheral surface of the front wheel 12. The second sliding member 352 slides on center and rear portions of the bottom surface 111 of the housing 11. The front portion indicates a portion on the left side in FIG. 3, and the rear portion indicates a portion on the right side in FIG. 3. The third sliding member 353 slides on the peripheral surface of the rear wheel 13.

The washing station 3 electrically connects to the mower 2. In other words, when the mower 2 is placed at a predetermined position of the placement base 33, power is supplied to the mower 2 from the washing station 3.

When the mower 2 is electrically connected to the washing station 3, the power supplier 34 supplies the mower 2 with the power. Specifically, the power supplier 34 supplies the charger 26 of the mower 2 with the power.

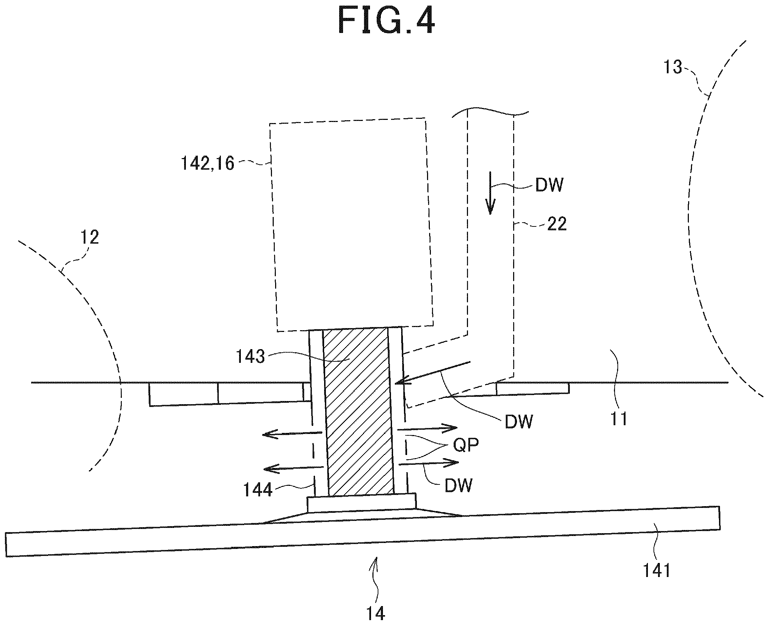

The mower 2 includes the water receiver 21 and a first flow path 22. The water receiver 21 is disposed on an upper portion of the housing 11 and receives the tap water that is supplied from the water supplier 32. The water receiver 21 includes an upper surface opening 211. The water receiver 21 forms, for example, a box shape, and an upper surface thereof forms the upper surface opening 211. The tap water that flows out of the outflow opening 323 of the water supplier 32 flows into the water receiver 21 via the upper surface opening 211. The first flow path 22 causes the tap water that flows into the water receiver 21 to flow toward the work unit 14. The first flow path 22 is formed along an up-down direction inside the mower main body 2A. A spreading member 144 causes the tap water that flows in from the first flow path 22 to flow out from between the cutting blade disc 141 of the work unit 14 and the bottom surface 111 of the housing 11. The spreading member 144 will be explained later in detail with reference to FIG. 4.

### [1-4. Function of first controller]

Next, the function of the first controller 20 will be explained with reference to FIG. 3.

The first controller 20 operates the work unit 14 so that the mower main body 2A is washed. Specifically, the first controller 20 causes the work unit driving motor 142 to rotationally drive the cutting blade disc 141. The cutting blade disc 141 rotates, and thereby the tap water that flows out of the spreading member 144 is spread around the cutting blade disc 141. Specifically, the cutting blade disc 141 rotates, and thereby the tap water that flows out of the spreading member 144 is spread on the washing target portions such as the bottom surface 111 of the housing 11, the peripheral surface of the front wheel 12, and the peripheral surface of the rear wheel 13.

Furthermore, the first controller 20 causes the work unit driving motor 142 to rotationally drive the spreading member 144. The spreading member 144 rotationally drives, and thereby the tap water flows out of the spreading member 144. The spreading member 144 will be explained later in detail with reference to FIG. 4.

Furthermore, the first controller 20 operates the lifting and lowering mechanism 16 so that the mower main body 2A is washed. Specifically, the first controller 20, when the mower main body 2A is washed, causes the lifting and lowering mechanism 16 to lower the cutting blade disc 141. Lowering the cutting blade disc 141 widens a gap between the bottom surface 111 of the housing 11 and the cutting blade disc 141, making it easier to remove dirt that adheres to the bottom surface 111 of the housing 11.

Furthermore, the first controller 20, when the mower 2 moves to the washing station 3, that is, when the mower 2 moves onto the placement base 33, causes the lifting and lowering mechanism 16 to lift the cutting blade disc 141. Lifting the cutting blade disc 141 can prevent the cutting blade disc 141 from being in contact with the upper surface of the placement base 33 when the mower 2 moves onto the placement base 33. This makes it easier for the mower 2 to move to the washing station 3.

Furthermore, the first controller 20 causes the traveling motor 15 to drive the mower main body 2A to travel so that the mower main body 2A is washed. Specifically, the first controller 20 causes the traveling motor 15 to drive the mower main body 2A to travel so that the washing target portion of the mower main body 2A slides on the sliding member 35 that is disposed on the washing station 3. For example, the mower main body 2A is driven to travel in a front direction DF and a rear direction DR, and thereby the washing target portion of the mower main body 2A can slide on the sliding member 35.

### [1-5. Configuration of spreading member]

FIG. 4 is a side cross-sectional view showing one example of a configuration of the spreading member 144. The work unit 14 includes a driving shaft 143 and the spreading member 144.

The driving shaft 143 forms a columnar shape and transmits a rotational torque of the work unit driving motor 142 to the cutting blade disc 141. In other words, the work unit driving motor 142 rotationally drives the cutting blade disc 141 via the driving shaft 143.

The spreading member 144 spreads the tap water on the cutting blade disc 141. The spreading member 144 forms a cylindrical shape, is disposed around the driving shaft 143, and has an opening QP that causes the tap water to flow out. The tap water flows from the first flow path 22 into a gap between the spreading member 144 and the driving shaft 143. Then, the tap water flows out of the opening QP.

Furthermore, the spreading member 144 is rotationally driven by the work unit driving motor 142. Specifically, the spreading member 144 and the driving shaft 143 are integrated, and in such an integrated manner, the spreading member 144 and the driving shaft 143 are rotationally driven by the work unit driving motor 142.

Thus, the spreading member 144 and the driving shaft 143 are rotationally driven by the work unit driving motor 142 in the integrated manner, causing the tap water that flows into the gap between the spreading member 144 and the driving shaft 143 to flow out of the opening QP by centrifugal force.

### [2. Processing of first controller]

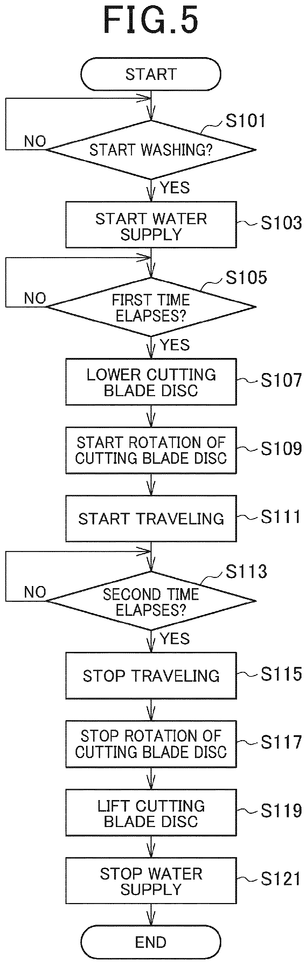

FIG. 5 is a flowchart showing one example of processing of the first controller 20.

First, in step S101, the first controller 20 determines whether washing of the mower 2 is to be started. For example, when the mower 2 executes the mowing work for equal to or greater than a predetermined time and thereafter is disposed on the placement base 33 of the washing station 3, the first controller 20 determines that washing of the mower 2 is to be started. The predetermined time is, for example, 30 minutes.

When the first controller 20 determines that washing of the mower 2 is not to be started (NO in step S101), the processing enters a standby state. When the first controller 20 determines that washing of the mower 2 is to be started (YES in step S101), the processing proceeds to step S103.

In step S103, the first controller 20 instructs, via the first communicator 25 and the second communicator 312, the second controller 311 to start water supply. The second controller 311, according to the instruction that is issued by the first controller 20, causes the electric valve 36 to be in an opened state and starts water supply.

Next, in step S105, the first controller 20 determines whether a first time T1 elapses. The first time T1 is set to be longer than a time from when the electric valve 36 is caused to be in an opened state to when the tap water reaches the opening QP of the spreading member 144 via the water receiver 21 and the first flow path 22. The first time T1 is, for example, 1 minute.

When the first controller 20 determines that the first time T1 does not elapse (NO in step S105), the processing enters a standby state. When the first controller 20 determines that the first time T1 elapses (YES in step S105), the processing proceeds to step S107.

In step S107, the first controller 20 causes the lifting and lowering mechanism 16 to lower the cutting blade disc 141.

Next, in step S109, the first controller 20 causes the work unit driving motor 142 to start rotation of the cutting blade disc 141.

Next, in step S111, the first controller 20 causes the traveling motor 15 to start traveling of the mower main body 2A so that the washing target portion of the mower main body 2A slides on the sliding member 35 that is disposed on the washing station 3.

Next, in step S113, the first controller 20 determines whether a second time T2 elapses. The second time T2 indicates a time from when washing of the mower main body 2A starts to when the washing of the mower main body 2A ends. The second time T2 is set based on, for example, a time during which the mower 2 executes the mowing work before the mower 2 is disposed on the placement base 33 of the washing station 3. The second time T2 is, for example, 10 minutes.

When the first controller 20 determines that the second time T2 does not elapse (NO in step S113), the processing enters a standby state. When the first controller 20 determines that the second time T2 elapses (YES in step S113), the processing proceeds to step S115.

In step S115, the first controller 20 stops the traveling of the mower main body 2A that is driven by the traveling motor 15.

Next, in step S117, the first controller 20 causes the work unit driving motor 142 to stop the rotation of the cutting blade disc 141.

Next, in step S119, the first controller 20 causes the lifting and lowering mechanism 16 to lift the cutting blade disc 141.

Next, in step S121, the first controller 20 instructs, via the first communicator 25 and the second communicator 312, the second controller 311 to stop the water supply. The second controller 311, according to the instruction that is issued by the first controller 20, causes the electric valve 36 to be in a closed state and stops the water supply. Thereafter, the processing ends.

### [3. Another embodiment of cutting blade disc]

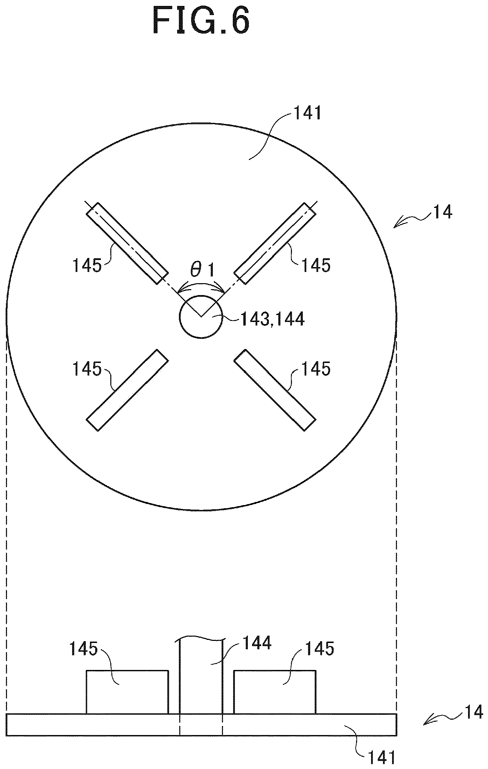

FIG. 6 is a view showing another embodiment of the cutting blade disc 141. An upper view in FIG. 6 is a plan view of the cutting blade disc 141, and a lower view in FIG. 6 is a side view of the cutting blade disc 141.

As shown in FIG. 6, the cutting blade disc 141 is equipped with four water sprinkling plates 145. Each of the four water sprinkling plates 145 forms a rectangular plate shape and is fixed on an upper surface of the cutting blade disc 141.

Specifically, each of the four water sprinkling plates 145 is disposed radially around the center of the cutting blade disc 141, that is, around the driving shaft 143 and the spreading member 144. The four water sprinkling plates 145 are disposed at an angle θ1 with respect to each other around the center of the cutting blade disc 141. The angle θ1 is 90 degrees.

The water sprinkling plate 145 is disposed on the upper surface of the cutting blade disc 141, so that the tap water that flows out of the opening QP of the spreading member 144 hits the water sprinkling plate 145 and, by the water sprinkling plate 145, is sprinkled toward the outside of the cutting blade disc 141. This enables the tap water to be sprinkled effectively toward the washing target portion of the mower main body 2A (for example, the bottom surface 111 of the housing 11). Accordingly, the mower main body 2A can be washed effectively.

### [4. Another embodiment of placement base]

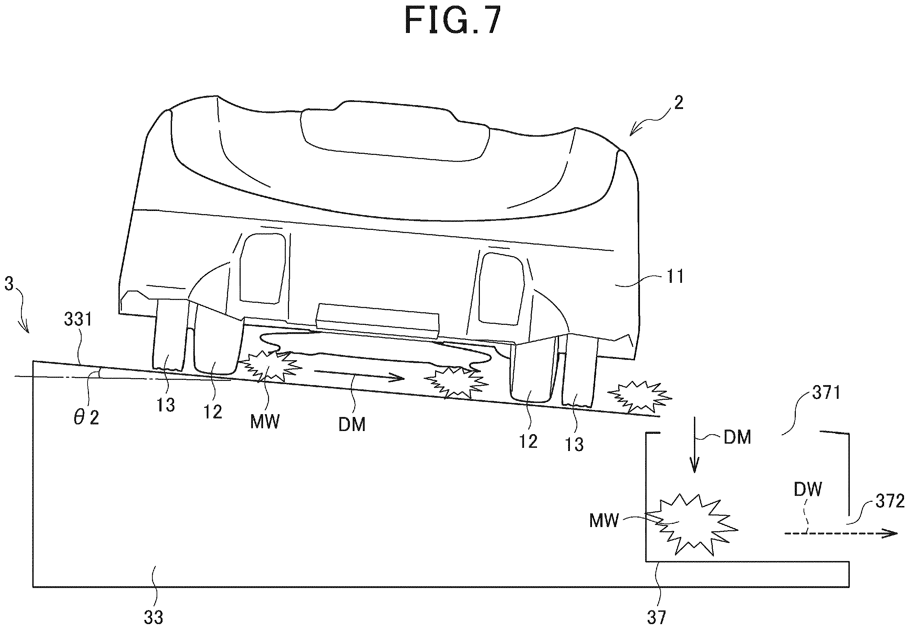

FIG. 7 is a view showing another embodiment of the placement base 33. FIG. 7 is a cross-sectional view showing a cross section of the placement base 33 orthogonal to the front direction DF and the rear direction DR that are shown in FIG. 3.

An upper surface 331 of the placement base 33 is inclined by an angle θ2 with respect to the horizontal direction. The angle θ2 is, for example, 5 degrees.

The upper surface 331 of the placement base 33 is inclined, and accordingly a dirt MW such as pieces of mowed grass flows down together with the tap water from the left side of the placement base 33 to the right side thereof as shown in a direction DM.

The placement base 33 is equipped with a reservoir 37 that reserves the dirt MW. The reservoir 37 forms a box shape and, in the placement base 33, extends along the front direction DF shown in FIG. 3. The reservoir 37 includes a first opening 371 and a second opening 372. The first opening 371 is formed on an upper surface of the reservoir 37, and the dirt MW and the tap water that flow down from the upper surface 331 of the placement base 33 flow into the first opening 371. The second opening 372 is formed on one side surface of the reservoir 37, and the tap water flows out of the reservoir 37 as shown in a direction DW.

Thus, along the upper surface 331 of the placement base 33, the dirt MW flows down together with the tap water in the direction DM and flows into the reservoir 37 via the first opening 371. Then, the tap water flows out of the reservoir 37 in the direction DW. Accordingly, the dirt MW can be reserved in the reservoir 37.

### [5. Effect of the present embodiment]

As explained above, in the present embodiment, the mower 2 executes the mowing work while traveling autonomously. Furthermore, the mower 2 includes the mower main body 2A and the first controller 20 that controls the operation of the mower main body 2A so that the mower main body 2A is washed with the tap water that is supplied from the washing station 3.

Accordingly, the first controller 20 controls the operation of the mower main body 2A so that the mower main body 2A is washed with the tap water that is supplied from the washing station 3, and thus dirt that adheres to the mower main body 2A can be washed off.

Furthermore, the mower 2 includes the work unit 14 that executes the mowing work, and the first controller 20 operates the work unit 14 so that the mower main body 2A is washed.

Accordingly, the first controller 20 operates the work unit 14 so that the mower main body 2A is washed, and thus dirt that adheres to the mower main body 2A can be washed off effectively.

Furthermore, the work unit 14 includes the cutting blade disc 141 that executes the mowing work, and the work unit driving motor 142 that rotationally drives the cutting blade disc 141, and the first controller 20 causes the work unit driving motor 142 to rotationally drive the cutting blade disc 141.

Thus, the first controller 20 causes the work unit driving motor 142 to rotationally drive the cutting blade disc 141, allowing the cutting blade disc 141 to sprinkle the tap water. Accordingly, dirt that adheres to the mower main body 2A can be washed off effectively.

Furthermore, the mower 2 includes the spreading member 144 that spreads the tap water on the cutting blade disc 141.

Thus, the spreading member 144 spreads the tap water on the cutting blade disc 141, allowing the cutting blade disc 141 to sprinkle the tap water. Accordingly, dirt that adheres to the mower main body 2A can be washed off effectively.

Furthermore, the spreading member 144 has the opening QP that causes the tap water to flow out, and the first controller 20 causes the work unit driving motor 142 to rotationally drive the spreading member 144.

Accordingly, the work unit driving motor 142 rotationally drives the spreading member 144 that has the opening QP, allowing the tap water to flow out of the spreading member 144.

Furthermore, the mower 2 includes the lifting and lowering mechanism 16 that lifts and lowers the cutting blade disc 141, and the first controller 20 operates the lifting and lowering mechanism 16 so that the mower main body 2A is washed.

Accordingly, the first controller 20 operates the lifting and lowering mechanism 16 so that the mower main body 2A is washed, and thus dirt that adheres to the mower main body 2A can be washed off effectively.

Furthermore, the first controller 20, when the mower main body 2A is washed, causes the lifting and lowering mechanism 16 to lower the cutting blade disc 141.

Thus, the first controller 20, when the mower main body 2A is washed, causes the lifting and lowering mechanism 16 to lower the cutting blade disc 141, widening the gap between the bottom surface 111 of the housing 11 and the cutting blade disc 141. Accordingly, dirt that adheres to the bottom surface 111 of the housing 11 can be washed off effectively.

Furthermore, the first controller 20, when the mower 2 moves to the washing station 3, causes the lifting and lowering mechanism 16 to lift the cutting blade disc 141.

Thus, the first controller 20, when the mower 2 moves to the washing station 3, causes the lifting and lowering mechanism 16 to lift the cutting blade disc 141, preventing the cutting blade disc 141 from being in contact with the upper surface of the placement base 33. This makes it easier for the mower 2 to move to the washing station 3.

Furthermore, the mower 2 includes the traveling motor 15 that drives the mower main body 2A to travel, and the first controller 20 causes the traveling motor 15 to drive the mower main body 2A to travel so that the mower main body 2A is washed.

Accordingly, the first controller 20 causes the traveling motor 15 to drive the mower main body 2A to travel so that the mower main body 2A is washed, and thus dirt that adheres to the mower main body 2A can be washed off.

Furthermore, the first controller 20 causes the traveling motor 15 to drive the mower main body 2A to travel so that the washing target portion of the mower main body 2A slides on the sliding member 35 that is disposed on the washing station 3.

Accordingly, the first controller 20 causes the traveling motor 15 to drive the mower main body 2A to travel so that the washing target portion of the mower main body 2A slides on the sliding member 35 that is disposed on the washing station 3, and thus dirt that adheres to the mower main body 2A can be washed off effectively.

Furthermore, the washing station 3 is equipped with the water supplier 32 that supplies the mower 2 with the tap water, and the mower 2 includes the water receiver 21 that receives the tap water from the water supplier 32 when the mower 2 is disposed on the washing station 3.

Thus, the water receiver 21 receives the tap water from the water supplier 32 when the mower 2 is disposed on the washing station 3, allowing the mower 2 to be easily supplied with the tap water. Accordingly, dirt that adheres to the mower main body 2A can be washed off.

Furthermore, the washing station 3 is equipped with the power supplier 34 that supplies the mower 2 with power, and the mower 2 includes the battery 17 and the charger 26 that, when the mower 2 is disposed on the washing station 3, charges the battery 17 with the power that is supplied from the power supplier 34.

Accordingly, there is provided the charger 26 that, when the mower 2 is disposed on the washing station 3, charges the battery 17 with the power that is supplied from the power supplier 34, allowing the battery 17 to be easily charged.

In the present embodiment, the washing system 100 includes the mower 2 that executes the mowing work while traveling autonomously, and the washing station 3. The washing station 3 includes the water supplier 32 that supplies the mower 2 with the tap water, and the mower 2 includes the mower main body 2A and the first controller 20 that controls the operation of the mower main body 2A so that the mower main body 2A is washed with the tap water that is supplied from the washing station 3.

Accordingly, the first controller 20 controls the operation of the mower main body 2A so that the mower main body 2A is washed with the tap water that is supplied from the washing station 3, and thus dirt that adheres to the mower main body 2A can be washed off.

Furthermore, the washing station 3 includes the sliding member 35 that slides on the washing target portion of the mower main body 2A, the mower 2 includes the traveling motor 15 that drives the mower main body 2A to travel, and the first controller 20 causes the traveling motor 15 to drive the mower main body 2A to travel so that the washing target portion of the mower main body 2A slides on the sliding member 35 that is disposed on the washing station 3.

Accordingly, the first controller 20 causes the traveling motor 15 to drive the mower main body 2A to travel so that the washing target portion of the mower main body 2A slides on the sliding member 35 that is disposed on the washing station 3, and thus dirt that adheres to the mower main body 2A can be washed off effectively.

Furthermore, the mower 2 includes the water receiver 21 that receives the tap water from the water supplier 32 when the mower 2 is disposed on the washing station 3.

Thus, the water receiver 21 receives the tap water from the water supplier 32 when the mower 2 is disposed on the washing station 3, allowing the mower 2 to be easily supplied with the tap water. Accordingly, dirt that adheres to the mower main body 2A can be washed off.

Furthermore, the washing station 3 includes the power supplier 34 that supplies the mower 2 with power, and the mower 2 includes the battery 17 and the charger 26 that, when the mower 2 is disposed on the washing station 3, charges the battery 17 with the power that is supplied from the power supplier 34.

Accordingly, there is provided the charger 26 that, when the mower 2 is disposed on the washing station 3, charges the battery 17 with the power that is supplied from the power supplier 34, allowing the battery 17 to be easily charged.

In the present embodiment, there is provided a method of controlling the washing system 100 including: the mower 2 that has the mower main body 2A and executes the mowing work while traveling autonomously, and the washing station 3, in which the washing station 3 supplies the mower 2 with the tap water, and the first controller 20 of the mower 2 controls the operation of the mower main body 2A so that the mower main body 2A is washed with the tap water.

Accordingly, the washing station 3 supplies the mower 2 with the tap water, and the operation of the mower main body 2A is controlled so that the mower main body 2A is washed with the tap water. Thus, dirt that adheres to the mower main body 2A can be washed off.

### [6. Other embodiments]

The present invention is not limited to the configuration of the above embodiment and may be implemented in various aspects without departing from the gist of the present invention.

For example, although in the present embodiment, the "autonomous traveling work machine" is the robotic mower 2, embodiments of the present invention are not limited to this. The "autonomous traveling work machine" may execute the predetermined work while traveling autonomously. For example, the "autonomous traveling work machine" may be a robotic snow removal machine that performs a snow removal work while traveling autonomously.

Furthermore, although in the present embodiment, the "washing liquid" is tap water, embodiments of the present invention are not limited to this. The "washing liquid" may be water, such as tap water, to which detergent is added.

Furthermore, although in the present embodiment, the water receiver 21 receives the tap water that flows down from the outflow opening 323 of the water supplier 32, embodiments of the present invention are not limited to this. The water supplier 32 and the water receiver 21 may be engaged with each other so that the water supplier 32 supplies the water receiver 21 with the tap water. For example, the water supplier 32 includes a recessed member, and the water receiver 21 includes a raised member that engages with the recessed member. The raised member engages with the recessed member, and thereby the water supplier 32 supplies the water receiver 21 with the tap water.

Furthermore, for example, the placement base 33 of the washing station 3 may include a nozzle that jets high-pressure water, and the first controller 20, such that the high-pressure water is jetted toward the washing target portion of the mower main body 2A, may cause the traveling motor 15 to drive the mower main body 2A to travel.

Furthermore, although in the present embodiment, the washing station 3 and the mower 2 communicate with each other in a wireless manner, the present invention is not limited to this. It is sufficient that the washing station 3 and the mower 2 can communicate with each other. For example, the washing station 3 and the mower 2 may communicate with each other in a wired manner. Specifically, a communication line may be disposed which communicably connects the control board 31 and the first controller 20, and via the communication line, the control board 31 and the first controller 20 may communicate with each other. Furthermore, for example, the control board 31 and the first controller 20 may execute so-called power line communication via a power line.

Furthermore, at least part of the functional blocks shown in the drawings such as FIGS. 2 and 3 may be implemented by hardware or may be implemented by cooperation of hardware and software, which is not limited to a configuration in which hardware resources are disposed independently as shown in the drawings.

Furthermore, the control program that is executed by the first controller 20 may be stored in the other storage in the memory. Furthermore, a configuration may be provided in which a control program that is stored in an external device is acquired via a communicator or the like and is executed.

Furthermore, the processing of the first controller 20, for facilitation of the understanding, is divided into the processing units in the flowchart shown in FIG. 5, according to the main processing contents. The embodiment is not limited by a way of the division into the processing units in the flowchart shown in FIG. 5, and names of the processing units. Furthermore, the processing of the first controller 20 may be divided into still more processing units, according to the processing contents, and one processing unit may be divided so as to include still more processing. Furthermore, processing procedures of the above flowchart are also not limited to the illustrated examples.
Dirt that adheres to a mower main body is washed off. A mower 2 executes a mowing work while traveling autonomously. Furthermore, the mower 2 includes a mower main body 2A and a first controller 20 that controls an operation of the mower main body 2A so that the mower main body 2A is washed with tap water that is supplied from a washing station 3. The mower 2 includes, for example, a work unit 14 that executes the mowing work, and the first controller 20 operates the work unit 14 so that the mower main body 2A is washed.

### Reference Signs List

- 1:: mowing system
- 2:: robotic mower, mower (autonomous traveling work machine)
- 3:: washing station
- 11:: housing
- 12:: front wheel
- 13:: rear wheel
- 14:: work unit
- 15:: traveling motor (second drive)
- 16:: lifting and lowering mechanism (lifting and lowering unit)
- 17:: battery (storage battery)
- 20:: first controller (controller)
- 21:: water receiver
- 22:: first flow path
- 25:: first communicator
- 26:: charger
- 2A:: mower main body
- 30:: arch member
- 31:: control board
- 32:: water supplier
- 33:: placement base
- 34:: power supplier
- 35:: sliding member
- 36:: electric valve
- 100:: washing system
- 111:: bottom surface
- 141:: cutting blade disc (work member)
- 142:: work unit driving motor (first drive)
- 144:: spreading member
- 211:: upper surface opening
- 311:: second controller
- 312:: second communicator
- 321:: inflow opening
- 322:: second flow path
- 323:: outflow opening
- 351:: first sliding member
- 352:: second sliding member
- 353:: third sliding member
- DF:: front direction
- DR:: rear direction
- QP:: opening
- T1:: first time
- T2:: second time

## Claims

1. A washing system comprising:
an autonomous traveling work machine (2) configured to execute a predetermined work while traveling autonomously; and
a washing station (3),
the autonomous traveling work machine (2) comprises:
a work machine main body (2A);
a controller (20) configured to control an operation of the work machine main body so that the work machine main body is washed with a washing liquid being supplied from a washing station; and
a work unit (14) configured to execute the predetermined work, wherein the work unit comprises a work member (141) configured to execute the predetermined work, and a first drive (142) for rotationally driving the work member (141);
wherein the washing station (3) is equipped with a water supplier (32)
**characterized in that**
the water supplier (32) is configured to supply the autonomous traveling work machine (2) with the washing liquid, and **in that** the autonomous traveling work machine (2) further comprises:
a water receiver (21) for receiving the washing liquid from the water supplier (32) when the autonomous traveling work machine is disposed on the washing station, and a spreading member (144) for spreading the washing liquid on the work member, wherein the spreading member (144) comprises an opening (QP) for causing the washing liquid to flow out, and
wherein the controller (20) is configured to operate the work unit (14) so that the work machine main body (2A) is washed so as to cause the first drive (142) to rotationally drive the work member (141) and the spreading member (144).

2. The washing system according to claim 1, wherein the autonomous traveling work machine comprises a lifting and lowering unit (16) lifting and lowering the work member (141), wherein the controller (20) is configured to operate the lifting and lowering unit (16) so that the work machine main body is washed.

3. The washing system according to claim 2, wherein when the work machine main body is washed, the controller (20) is configured to cause the lifting and lowering unit (16) to lower the work member (141).

4. The washing system according to claim 2 or 3, wherein when the autonomous traveling work machine (2) moves to the washing station (3), the controller (20) is configured to cause the lifting and lowering unit (16) to lift the work member (141).

5. The washing system according to any one of claims 1 to 4, wherein the autonomous traveling work machine (2) comprises a second drive (15) for driving the work machine main body to travel, wherein the controller (20) is configured to cause the second drive (15) to drive the work machine main body to travel so that the work machine main body (2A) is washed.

6. The washing system according to claim 5, wherein the controller (20) is configured to cause the second drive (15) to drive the work machine main body to travel so that a washing target portion of the work machine main body (2A) slides on a sliding member (35) being disposed on the washing station (3).

7. The washing system according to any one of claims 1 to 6, wherein the washing station (3) is equipped with a power supplier (34) for supplying the autonomous traveling work machine (2) with power, the autonomous traveling work machine (2) comprising:
a storage battery (17); and
a charger (26), so that when the autonomous traveling work machine (2) is disposed on the washing station (3), the charger (26) is configured to charge the storage battery (17) with the power being supplied from the power supplier (34).

8. A method of controlling a washing system (1) according to any one of claims 1 to 7.

## Patentansprüche

1. Waschsystem, welches aufweist:
eine autonom fahrende Arbeitsmaschine (2), die konfiguriert ist, um eine vorbestimmte Arbeit auszuführen, während sie autonom fährt; und
eine Waschstation (3),
wobei die autonom fahrende Arbeitsmaschine (2) aufweist:
einen Arbeitsmaschinenhauptkörper (2A);
ein Steuergerät (20), das konfiguriert ist, um einen Betrieb des Arbeitsmaschinenhauptkörpers derart zu steuern, dass der Arbeitsmaschinenkörper mit einer Waschflüssigkeit gewaschen wird, die von einer Waschstation zugeführt wird; und
eine Arbeitseinheit (14), die konfiguriert ist, um die vorbestimmte Arbeit auszuführen, wobei die Arbeitseinheit ein Arbeitselement (141) aufweist, das konfiguriert ist, um die vorbestimmte Arbeit auszuführen, sowie einen ersten Antrieb (142) zum drehenden Antrieb des Arbeitselements (141);
wobei die Waschstation (3) mit einer Wasserversorgung (32) ausgestattet ist,
**dadurch gekennzeichnet, dass**
die Wasserversorgung (32) konfiguriert ist, um die autonom fahrende Arbeitsmaschine (2) mit der Waschflüssigkeit zu versorgen, und dass
die autonom fahrende Arbeitsmaschine ferner aufweist:
eine Wasseraufnahme (21) zum Aufnehmen der Waschflüssigkeit von der Wasserversorgung (32), wenn die autonom fahrende Arbeitsmaschine an der Waschstation angeordnet ist, und ein Verteilungselement (144) zum Verteilen der Waschflüssigkeit auf dem Arbeitselement, wobei das Verteilungselement (144) eine Öffnung (QP) aufweist, um zu veranlassen, dass die Waschflüssigkeit hinaus fließt, und
wobei das Steuergerät (20) konfiguriert ist, um die Arbeitseinheit (14) derart zu betreiben, dass der Arbeitsmaschinenhauptkörper (2A) gewaschen wird, um zu veranlassen, dass der erste Antrieb (142) das Arbeitselement (141) und das Verteilungselement (144) drehend antreibt.

2. Das Waschsystem nach Anspruch 1, wobei die autonom fahrende Arbeitsmaschine eine Hub- und Absenkeinheit (16) aufweist, um das Arbeitselement (141) anzuheben und abzusenken,
wobei das Steuergerät (20) konfiguriert ist, um die Hub- und Absenkeinheit (16) derart zu betreiben, dass der Arbeitsmaschinenkörper gewaschen wird.

3. Das Waschsystem nach Anspruch 2, wobei, wenn der Arbeitsmaschinenhauptkörper gewaschen wird, das Steuergerät (20) konfiguriert ist, um zu veranlassen, dass die Hub- und Absenkeinheit (16) das Arbeitselement (141) absenkt.

4. Das Waschsystem nach Anspruch 2 oder 3, wobei, wenn die autonom fahrende Arbeitsmaschine (2) sich zu der Waschstation (3) bewegt, das Steuergerät (20) konfiguriert ist, um zu veranlassen, dass die Hub- und Absenkeinheit (16) das Arbeitselement (141) anhebt.

5. Das Waschsystem nach einem der Ansprüche 1 bis 4, wobei die autonom fahrende Arbeitsmaschine (2) einen zweiten Antrieb (15) aufweist, um den Arbeitsmaschinenhauptkörper zur Fahrt anzutreiben,
wobei das Steuergerät (20) konfiguriert ist, um zu veranlassen, dass der zweite Antrieb (15) den Arbeitsmaschinenhauptkörper zu einer derartigen Fahrt antreibt, dass der Arbeitsmaschinenhauptkörper (2A) gewaschen wird.

6. Das Waschsystem nach Anspruch 5, wobei das Steuergerät (20) konfiguriert ist, um zu veranlassen, dass der zweite Antrieb (15) den Arbeitsmaschinenhauptkörper derart zur Fahrt antreibt, dass ein Wasch-Ziel-Abschnitt des Arbeitsmaschinenhauptkörpers (2A) auf einem an der Waschstation (3) angeordneten Schlittenelement (35) gleitet.

7. Das Waschsystem nach einem der Ansprüche 1 bis 6, wobei die Waschstation (3) mit einer Stromversorgung (34) ausgestattet ist, um die autonom fahrende Arbeitsmaschine (2) mit Strom zu versorgen, wobei die autonom fahrende Arbeitsmaschine (2) aufweist:
eine Speicherbatterie (17); und
ein Ladegerät (26), sodass, wenn die autonom fahrende Arbeitsmaschine (2) an der Waschstation (3) angeordnet ist, das Ladegerät (26) konfiguriert ist, um die Speicherbatterie (17) mit dem von der Stromversorgung (34) zugeführten Strom zu laden.

8. Verfahren zum Steuern eines Waschsystems (1) nach einem der Ansprüche 1 bis 7.

## Revendications

1. Système de lavage comprenant :
une machine de travail à déplacement autonome (2) configurée pour exécuter un travail prédéterminé tout en se déplaçant de manière autonome ; et
une station de lavage (3),
la machine de travail à déplacement autonome (2) comprend :
un corps principal de machine de travail (2A) ;
un dispositif de commande (20) configuré pour commander une opération du corps principal de machine de travail de telle sorte que le corps principal de machine de travail est lavé avec un liquide de lavage fourni à partir d'une station de lavage ; et
une unité de travail (14) configurée pour exécuter le travail prédéterminé, dans lequel l'unité de travail comprend un élément de travail (141) configuré pour exécuter le travail prédéterminé, et un premier entraînement (142) destiné à entraîner en rotation l'élément de travail (141) ;
dans lequel la station de travail (3) est équipée d'une alimentation en eau (32),
**caractérisé en ce que**
l'alimentation en eau (32) est configurée pour alimenter la machine de travail à déplacement autonome (2) en liquide de lavage, et **en ce que**
la machine de travail à déplacement autonome (2) comprend en outre :
un récipient d'eau (21) destiné à recevoir le liquide de lavage de l'alimentation en eau (32) lorsque la machine de travail à déplacement autonome est disposée sur la station de lavage, et
un élément d'étalement (144) destiné à étaler le liquide de lavage sur l'élément de travail, dans lequel l'élément d'étalement (144) comprend une ouverture (QP) pour amener le liquide de lavage à s'écouler à l'extérieur, et
dans lequel le dispositif de commande (20) est configuré pour actionner l'unité de travail (14) de telle sorte que le corps principal de machine de travail (2A) est lavé de sorte à amener le premier entraînement (142) à entraîner en rotation l'élément de travail (141) et l'élément d'étalement (144).

2. Système de lavage selon la revendication 1, dans lequel la machine de travail à déplacement autonome comprend une unité de levage et d'abaissement (16) levant et abaissant l'élément de travail (141),
dans lequel le dispositif de commande (20) est configuré pour actionner l'unité de levage et d'abaissement (16) de telle sorte que le corps principal de machine de travail est lavé.

3. Système de lavage selon la revendication 2, dans lequel lorsque le corps principal de machine de travail est lavé, le dispositif de commande (20) est configuré pour amener l'unité de levage et d'abaissement (16) à abaisser l'élément de travail (141).

4. Système de lavage selon la revendication 2 ou 3, dans lequel lorsque la machine de travail à déplacement autonome (2) se déplace vers la station de lavage (3), le dispositif de commande (20) est configuré pour amener l'unité de levage et d'abaissement (16) à lever l'élément de travail (141).

5. Système de lavage selon l'une quelconque des revendications 1 à 4, dans lequel la machine de travail à déplacement autonome (2) comprend un second entraînement (15) destiné à entraîner le corps principal de machine de travail à se déplacer,
dans lequel le dispositif de commande (20) est configuré pour amener le second entraînement (15) à entraîner le corps principal de machine de travail à se déplacer de telle sorte que le corps principal de machine de travail (2A) est lavé.

6. Système de lavage selon la revendication 5, dans lequel le dispositif de commande (20) est configuré pour amener le second entraînement (15) à entraîner le corps principal de machine de travail à se déplacer de telle sorte qu'une partie cible de lavage du corps principal de machine de travail (2A) glisse sur un élément de glissement (35) disposé sur la station de lavage (3).

7. Système de lavage selon l'une quelconque des revendications 1 à 6, dans lequel la station de lavage (3) est équipée d'une alimentation en énergie (34) destinée à alimenter la machine de travail à déplacement autonome (2) en énergie, la machine de travail à déplacement autonome (2) comprenant :
une batterie rechargeable (17) ; et
un chargeur (26), de telle sorte que lorsque la machine de travail à déplacement autonome (2) est disposée sur la station de lavage (3), le chargeur (26) est configuré pour charger la batterie rechargeable (17) avec l'énergie fournie par l'alimentation en énergie (34).

8. Procédé de commande d'un système de lavage (1) selon l'une quelconque des revendications 1 à 7.
